# DEMANDE DE BREVET EUROPEEN

(11) **EP 0 877 005 A1**
(43) Date de publication de la demande: **11.11.1998**
(21) Numéro de dépôt: 98401094.2
(22) Date de dépôt: 06.05.1998
(51) Int. Cl.: C03C 17/36

(54) **Substrats transparents munis de couches à propriétés de reflexion dans l'infra-rouge et/ou dans le domaine du rayonnement solaire**

(30) Priorité: 09.05.1997 DE 19719542
(71) Demandeur: SAINT-GOBAIN VITRAGE, 92400 Courbevoie (FR)
(72) Inventeur: Schicht, Heinz, Dr., 06925 Bethau (DE); Schmidt, Uwe, 04895 Falkenberg/Elster (DE); Kaiser, Wilfried, 04860 Torgau (DE); Ditzel, Gerhard, 04860 Welsau (DE); Villari, Valentino, Dr., 41372 Niederkrüchten (DE)
(74) Mandataire: Muller, René

(57) **Abrégé**

Un empilement de couches de type bas-émissif ou de contrôle solaire pour substrats transparents, en particulier en verre, comprend au moins quatre couches, à savoir une couche de base antireflet diélectrique, une couche à base d'argent, une couche de blocage disposée sur la couche en argent, comprenant un alliage AlSi et une couche protectrice antireflet diélectrique.

## Description

L'invention concerne les substrats transparents, notamment en verre, revêtus d'un empilement de couches minces comprenant au moins une couche du type métallique pouvant agir sur le rayonnement solaire et/ou sur le rayonnement infra-rouge de grandes longueurs d'ondes. On parle ainsi d'empilements bas émissif ou de contrôle solaire, que l'on désignera par la suite par le terme d'empilements « fonctionnels ».

Il peut ainsi s'agir d'empilements à une ou plusieurs couches métalliques du type couches d'argent, disposée(s) entre des revêtements diélectrique éventuellement par l'intermédiaire de fines couches (du type métal, métal partiellement oxydé) ayant des fonctions de protection, de nucléation, etc... On trouvera la description de tels empilements par exemple dans les brevets EP-638 528 et EP-718 250.

L'invention concerne notamment un système de couches bas-émissif, constitué d'au moins quatre couches, pour substrats transparents, en particulier en verre, avec au moins une couche fonctionnelle en argent, une couche de base antireflet diélectrique, une couche protectrice antireflet diélectrique et une couche de blocage disposée entre la couche en argent et la couche protectrice antireflet, constituée d'un métal, d'un alliage métallique ou d'un oxyde sous-stoechiométrique d'un métal ou d'un alliage métallique.

Les empilements de couches fonctionnels de ce type sont connus sous de nombreuses formes de réalisation. La couche de blocage a pour but de protéger la couche en argent vis-à-vis de l'oxygène qui diffuse, ce qui conduirait à une altération de la couche en argent, ce par quoi, d'une part, l'émissivité du système de couches est augmentée et d'autre part, l'aspect optique de la couche est modifiée de manière défavorable. Dans la pratique, on préfère utiliser comme métaux de blocage, des alliages CrNi et des alliages TiPd, bien que l'utilisation d'autres métaux soit également connue dans ce but.

Les brevets EP-0 104 870 et EP-0 233 003 décrivent ainsi des couches de blocage constituées de différents métaux, entre autres en aluminium. Le brevet EP-0 035 906 décrit également la possibilité suivant laquelle la couche de blocage peut être également en silicium.

Fondamentalement, les métaux et alliages appropriés pour la couche de blocage sont ceux qui ont une affinité élevée pour l'oxygène et qui présentent une forte liaison avec l'oxygène. L'activité de la couche de blocage a une importance particulière lorsque les substrats revêtus subissent un traitement thermique à des températures élevées. C'est, par exemple, le cas lorsque les substrats en verre revêtus sont chauffés à leur température de ramolissement d'environ 650°C pour les bomber à cette température ou les soumettre à une prétension par refroidissement marqué (traitement thermique du type trempe ou recuit). On a montré que les couches de blocage connues dans ce but ne sont pas encore suffisamment efficaces lorsqu'elles sont déposées en très faible épaisseur. Or, cette faible épaisseur est cependant nécessaire si l'on veut obtenir une transmission lumineuse T_{L} élevée dans le domaine visible pour le vitrage muni de l'empilement de couches (haute T_{L} nécessaire, par exemple, dans le domaine de l'automobile où l'on doit atteindre notamment des valeurs de T_{L} de 70 à 75 % au moins pour les parebrise).

L'invention a alors pour but de procurer des couches de blocage avec une activité de fixation pour l'oxygène particulièrement élevée, qui possèdent, déjà à une très faible épaisseur, une activité protectrice élevée, de sorte que les empilements de couches présentent une transmission lumineuse élevée dans le domaine visible, par exemple de plus de 70 et même plus de 80%, avec une émissivité plus faible, de l'ordre de grandeur d'au plus 4%, notamment de 3% et moins, et de sorte que ces empilements conservent ces propriétés après un traitement thermique à des températures élevées.

L'invention a pour objet un substrat transparent, notamment verrier, muni d'un empilement d'au moins quatre couches dont au moins une couche fonctionnelle métallique à propriétés dans l'infra-rouge du type argent, une couche de base antireflet en matériau diélectrique, une couche de protection antireflet en matériau diélectrique et une couche de blocage disposée entre la couche fonctionnelle et la couche protectrice antireflet. Cette couche de blocage, usuellement en métal, alliage métallique en oxyde sous-stoechiométrique d'un ou plusieurs métaux, comporte selon l'invention un alliage AlSi.

Au sens de l'invention, les couches antireflet « de base » (sous la couche fonctionnelle considérée) ou « protectrice » (au-dessus) sont soit des couches individuelles, soit une superposition d'au moins deux couches de diélectrique.

Au sens de l'invention, la couche de blocage à base d'AlSi peut aussi être au moins partiellement oxydée, et/ou nitrurée.

Suivant l'invention, la couche de blocage est donc à base d'un alliage AlSi. Ainsi, dans une forme de réalisation utile de l'invention pour la préparation de la couche de blocage, on utilise des alliages AlSi avec une composition dans l'intervalle de 60 à 80% en poids de Al et de 40 à 20% en poids de Si, qui peuvent évidemment également contenir de faibles quantités d'autres métaux ou impuretés, ce qui est souvent inévitable dans la préparation de tels alliages.

Les empilements de couches avec une couche de blocage suivant l'invention montrent une stabilité remarquable, même lors d'un traitement thermique à température élevée. Cet effet surprenant peut être expliqué par le fait que Al et Si forment deux oxydes mixtes différents avec des enthalpies de formation fortement négatives. Alors que, par exemple Al₂O₃ présente une enthalpie de formation de seulement -380 kcal/mole et SiO₂, une enthalpie de formation de seulement -203 kcal/mole, l'oxyde mixte 3Al₂O₃-2SiO₂ a une enthalpie de formation de -1804 kcal/mole, et l'oxyde mixte Al₂O₃-SiO₂, une enthalpie de formation de -617 kcal/mole. Par la fixation particulièrement solide de l'oxygène dans ces oxydes mixtes et la forte affinité de ces groupes d'atomes pour l'oxygène, l'oxygène interstitiel dans la couche d'oxyde métallique faisant notamment partie du revêtement antireflet en diélectrique protecteur, et qui est notamment en ZnO, est évidemment fixé de manière particulièrement forte, de sorte que, lors du traitement thermique ultérieur, la couche Ag est protégée de manière particulièrement efficace vis-à-vis de l'oxygène qui diffuse, parce que celui-ci est maintenu dans le réseau par les oxydes mixtes AI-Si thermodynamiquement très stables.

On obtient des résultats particulièrement bons lorsque, pour la préparation de la couche de blocage AI-Si lors du dépôt des couches par le procédé de pulvérisation cathodique, on utilise une cible avec une composition qui correspond directement ou sensiblement au rapport stoechiométrique de ces deux éléments dans les oxydes mixtes cités. Pour cet objet, on utilise de préférence, des alliages AlSi constitués de 74,3% en poids de Al et de 25,7% en poids de Si ou de 65,8% en poids de Al et de 34,2% en poids de Si.

D'autres effets favorables sur le système de couches sont obtenus par des formes de réalisation proférées de l'invention, consistant en ce que l'empilement de couches comporte une couche à base de ZnO disposée directement sous la couche en argent. Avantageusement, celle-ci peut contenir une addition de Al et de Si dans le même rapport de quantité que pour la couche de blocage. La structure de la couche en argent est en effet favorablement influencée quand elle est déposée sur une couche à base de ZnO. Son « dopage » avec Al et avec Si a un effet supplémentaire en ce que, lors d'un traitement thermique ultérieur, la couche en argent sur le côté qui fait face au substrat, est également particulièrement bien protégée vis-à-vis de l'oxygène qui diffuse, de par l'activité forte de fixation du Al et du Si pour l'oxygène : on a ainsi des effets complémentaires de protection de l'argent pour chacune des couches avec lesquelles elle se trouve en contact.

Avantageusement, la couche en ZnO : AlSi est obtenue par pulvérisation cathodique réactive à partir d'une cible contenant du zinc métallique, et notamment de 0,3 à 8% en Al et de 0,05 à 1% en poids de Si.

De préférence, le substrat revêtu conformément à l'invention comporte soit une seule couche fonctionnelle du type argent avec sa couche de blocage comportant l'alliage AlSi, soit au moins deux couches fonctionnelles.

Dans ce cas, au moins l'une des couches fonctionnelles est munie de la couche de blocage selon l'invention, notamment au moins celle la plus éloignée du substrat. Avantageusement, elles sont toutes munies de la couche de blocage selon l'invention.

De préférence, au moins une des couches antireflet de l'empilement est à base d'au moins un des oxydes suivants : SnO₂, ZnO, TiOL, In₂O₃, Bi₂O₃, ZrO₂, Ta₂O₅, SiO₂, Al₂O₃. Au moins une des couches antireflet peut aussi être à base d'au moins un nitrure du type Si₃N₄, AIN, d'un oxynitrure du type SiON ou oxycarbure du type SiOC.

Dans ce qui suit, quelques exemples de réalisation des systèmes de couches suivant l'invention sont en outre décrits en comparaison à un exemple comparatif fait suivant l'état de la technique.

### Exemple comparatif

Sur un dispositif de pulvérisation en continu et à courant continu, on recouvre par le procédé de pulvérisation cathodique par champ magnétique, des plaques en verre flotté de 6 mm d'épaisseur, ayant pour dimensions 6 x 3,2 m², du système de couches suivant :
Verre - SnO₂ 20 nm - ZnO:Al 17 nm - Ag 11 nm - CrNi 8 nm - SnO₂ 40 nm.

La cible en zinc pour la préparation de la couche ZnO:Al est pulvérisée au moyen d'une atmosphère réactive Ar/O₂, à partir d'une cible en Zn métallique, qui est allié à 2% en poids de Al.

A partir des plaques en verre revêtues, on chauffe des échantillons d'une taille de 10 x 10 cm² dans un four de laboratoire à 670°C et on les soumet à un cycle temps-température correspondant au cycle de température dans un four réel de prétension (trempe). On mesure, pour ces échantillons, la transmission lumineuse (T_{L}), I'émissivité (E) et la résistance électrique (R), chaque fois avant et après le traitement thermique.

De plus, le comportement de lessivage des Ag⁺ de la couche avant le traitement thermique est déterminé, de manière photométrique au moyen du procédé appelé "Plattenmethode nach Kimmel et al.", comme décrit dans la revue "Glastechnische Berichte" 59 (1986), pages 252 et suivantes. Les résultats de ce procédé donnent des renseignements sur la structure de la couche en argent; plus épais et régulier est l'édifice atomique de la couche en argent, plus faible est la possibilité que des ions argent diffusent dans les couches supérieures, en présence d'humidité et que la couche en soit lessivée. Par l'utilisation d'une couche à base de ZnO en dessous de la couche en argent, cette possibilité de diffusion est réduite, et le comportement au lessivage, est amélioré.

De plus, des échantillons revêtus de taille 60 x 80 cm² sont chauffés dans un four classique de production à la température de prétension et ensuite, prétendus (trempés). Ces plaques échantillons sont évaluées visuellement.

Les mesures des échantillons de laboratoire donnent les résultats suivants :

### Avant le traitement thermique :

| Echantillon | E (%) | T_{L} (%) | R (Ω) | Lessivage (mg/l) |
|---|---|---|---|---|
| 1 | 3 | 69,1 | 3,87 | 0,38 |
| 2 | 4 | 70,1 | 4,01 | 0,54 |
| 3 | 3 | 69,3 | 3,74 | 0,43 |

### Après le traitement thermique :

| Echantillon | E (%) | T (%) | R (Ω) |
|---|---|---|---|
| 1 | 8 | 78 | 3,4 |
| 2 | 9 | 79 | 3,03 |
| 3 | 9 | 78 | 2,96 |

De manière semblable aux échantillons de laboratoire, les plaques échantillons traitées dans le four de production montrent également une augmentation marquée de l'émissivité. De plus, tous les échantillons ont un voile coloré après le traitement thermique. Les résultats conduisent à la conclusion que la couche en argent est altérée par l'oxygène qui diffuse pendant le traitement thermique.

### Exemple de Realisation 1

Dans la même installation que pour l'exemple comparatif, on munit des plaques en verre flotté de 6 mm d'épaisseur, de dimensions 6 x 3,2 m², du système de couches suivant :
Verre - Si₃N₄ 10 nm - SnO₂ 10 nm - ZnO:AlSi 17 nm - Ag 11 nm - AlSi 4 nm - SnO₂ 40 nm.

La couche de blocage AlSi est pulvérisée sous forme métallique à partir d'une cible qui se compose de 65,8% en poids de Al et 34,2% en poids de Si. La couche ZnO est pulvérisée dans un gaz de travail Ar/O₂, de manière réactive à partir d'une cible en Zn qui contient 0,1% en poids de Si et 1,2% en poids de Al. La couche Si₃N₄ est pulvérisée à partir d'une cible Si avec une cathode à double magnétron dans le domaine des fréquences moyennes avec une atmosphère réactive Ar/N₂.

Le traitement thermique de la plaque en verre revêtue et l'évaluation des échantillons revêtus avant et après le traitement thermique se fait de la même manière que pour l'exemple comparatif. On obtient ainsi, les valeurs suivantes pour les épreuves sur les échantillons de laboratoire :

### Avant le traitement thermique :

| Echantillon | E (%) | T_{L} (%) | R (Ω) | Lessivage (mg/l) |
|---|---|---|---|---|
| 1 | 3 | 79,6 | 3,59 | 0 |
| 2 | 3 | 79,3 | 3,49 | 0,10 |
| 3 | 3 | 79,4 | 3,62 | 0,11 |

### Après le traitement thermique :

| Echantillon | E (%) | T_{L} (%) | R (Ω) |
|---|---|---|---|
| 1 | 2 | 83,5 | 2,84 |
| 2 | 2 | 84,1 | 2,64 |
| 3 | 2 | 84,3 | 2,69 |

Les échantillons de laboratoire ont un aspect brillant, sans défaut, tout comme les plaques en verre traitées dans le dispositif de production, également après le traitement thermique. Pour les échantillons traités dans le dispositif de production, le rapport de l'émissivité à la résistance électrique est le même que pour les échantillons de laboratoire, l'émissivité s'élève à 4% après le traitement thermique.

### Exemple de Realisation 2

Dans le même dispositif que pour l'exemple comparatif, on munit des plaques en verre flotté de 6 mm d'épaisseur, du système de couches suivant :
Verre - SnO₂ 20 nm - ZnO:AlSi 17 nm - Ag 11 nm - AlSi 3 nm - Si₃N₄ 20 nm - SnO₂ 20 nm.

La couche de blocage en AlSi est pulvérisée de manière métallique à partir d'une cible AlSi de composition 74,3% en poids de Al et 25,7% en poids en Si. La couche ZnO est pulvérisée dans une atmosphère réactive Ar/O₂ de manière réactive à partir d'une cible en Zn, qui est allié avec 0,1% en poids de Si et 0,5% en poids de Al. La couche Si₃N₄ est à nouveau pulvérisée à partir d'une cible Si avec une cathode à double magnétron dans un domaine de fréquences moyennes, avec une atmosphère réactive Ar/N₂.

Le traitement thermique et l'évaluation des échantillons revêtus se font de la même manière que pour les exemples précédents. Les épreuves conduisent aux valeurs suivantes :

### Avant le traitement thermique :

| Echantillon | E (%) | T_{L} (%) | R (Ω) | Lessivage (mg/l) |
|---|---|---|---|---|
| 1 | 3 | 81,8 | 3,55 | 0 |
| 2 | 3 | 81,6 | 3,40 | 0 |
| 3 | 3 | 82,0 | 3,57 | 0 |

### Après le traitement thermique :

| Echantillon | E (%) | T_{L} (%) | R (Ω) |
|---|---|---|---|
| 1 | 2 | 84,5 | 2,80 |
| 2 | 2 | 84,7 | 2,55 |
| 3 | 3 | 84,8 | 2,59 |

Non seulement l'échantillon de laboratoire, mais aussi les plaques en verre traitées dans le dispositif de production, ont un aspect sans défaut, même après le traitement thermique.

### Exemple de Realisation 3

Dans le même dispositif de revêtement que pour les exemples précédents, on munit des plaques en verre flotté de 6 mm d'épaisseur, du système de couches suivant :
Verre - SnO₂:AlSi 20 nm - ZnO:AlSi 17 nm - Ag 11 nm - AlSi 4 nm - SnO₂:AlSi 40 nm.

La couche de blocage en AlSi est pulvérisée de manière métallique à partir d'une cible AlSi de composition 74,3% en poids de Al et 25,7% en poids en Si. La couche ZnO est pulvérisée dans un gaz de travail Ar/O₂ de manière réactive à partir d'une cible en Zn, qui est allié avec 1,29% en poids de Al et 0,1% en poids de Si. La couche de base et la couche protectrice en étain dopé de Al et de Si sont pulvérisées de manière réactive à partir d'une cible en étain métallique, qui est dopé avec 0,1% en poids d'un alliage AI-Si qui se compose de 74,3% en poids de Al et 25,7% en poids de Si.

Le traitement thermique et l'évaluation des échantillons revêtus se font de la même manière que pour les exemples précédents, ce qui donne les valeurs suivantes :

### Avant le traitement thermique :

| Echantillon | E (%) | T_{L} (%) | R (Ω) | Lessivage (mg/l) |
|---|---|---|---|---|
| 1 | 2-3 | 82,1 | 3,20 | 0 |
| 2 | 2-3 | 82,3 | 3,15 | 0,11 |
| 3 | 2-3 | 82,1 | 3,18 | 0,16 |

### Après le traitement thermique :

| Echantillon | E (%) | T_{L} (%) | R (Ω) |
|---|---|---|---|
| 1 | 2 | 85,3 | 2,51 |
| 2 | 2 | 85,5 | 2,50 |
| 3 | 3 | 86,0 | 2,49 |

Non seulement l'échantillon de laboratoire, mais aussi les plaques en verre traitées dans le dispositif de production, ont un aspect sans défaut, même après le traitement thermique.

## Revendications

1. Substrat transparent, notamment verrier, muni d'un empilement de couches, comportant au moins quatre couches, avec au moins une couche fonctionnelle métallique à propriétés dans l'infra-rouge du type argent, une autre de base antireflet diélectrique, une couche protectrice antireflet diélectrique et une couche de blocage disposée entre la couche fonctionnelle et la couche protectrice antireflet, ladite couche de blocage étant constituée d'un métal, d'un alliage métallique ou d'un oxyde sous-stoechiométrique d'un métal ou d'un alliage métallique, ***caractérisé en ce que*** ladite couche de blocage comporte un alliage AlSi.

2. Substrat selon la revendication 1, ***caractérisé en ce que*** la couche de blocage comporte 60 à 80% en poids de Al et 40 à 20% en poids de Si, éventuellement sous forme au moins partiellement oxydée.

3. Substrat selon la revendication 1 ou 2, ***caractérisé en ce que*** la couche de blocage comporte un mélange ou un alliage de 73 à 76% en poids de Al et 24 à 27% en poids de Si, éventuellement sous forme partiellement oxydée.

4. Substrat selon l'une des revendications 1 ou 2, ***caractérisé en ce que*** la couche de blocage consiste en un mélange ou un alliage de 64 à 67% en poids de Al et 33 à 36% en poids de Si, éventuellement sous forme partiellement oxydée.

5. Substrat selon l'une quelconque des revendications précédentes, ***caractérisé en ce que*** l'on dispose une couche à base de ZnO directement sous la couche en argent, laquelle contenant de préférence 0,5 à 2% en poids de Al et 0,05% à 1% en poids de Si.

6. Substrat selon l'une des revendications précédentes, ***caractérisé en ce que*** l'empilement comporte une couche fonctionnelle du type argent avec sa couche de blocage à base d'alliage AlSi, ou au moins deux couches fonctionnelles du type argent, au moins une des couches fonctionnelles étant munie de la couche de blocage à base d'alliage AlSi, notamment au moins la couche fonctionnelle la plus éloignée du substrat.

7. Substrat selon l'une des revendications précédentes, ***caractérisé en ce qu'au*** moins une des couches antireflet en matériaux diélectrique est à base d'au moins un des oxydes suivants : SnO₂, ZnO, TiO₂, In₂O₃, Bi₂O₃, ZrO₂, Ta₂O₅, SiO₂, Al₂O₃.

8. Substrat selon l'une des revendications précédentes, ***caractérisé en ce qu'au*** moins une des couches antireflet en matériau diélectrique est à base d'au moins un nitrure choisi parmi Si₃N₄, AIN, d'un oxynitrure du type SiON ou oxycarbure du type SiOC.

9. Substrat selon l'une quelconque des revendications précédentes, ***caractérisé par*** la suite des couches substrat-MeO-ZnO:AlSi-Ag-Alsi-MeO, où MeO est un oxyde métallique comme SnO₂, TiO₂, In₂O₃, Bi₂O₃, ZrO₂, Ta₂O₅, SiO₂ ou Al₂O₃, ou un mélange de ces oxydes.

10. Substrat selon l'une quelconque des revendications 1 à 8, ***caractérisé par*** la suite des couches substrat-Si₃N₄-MeO-ZnO:AlSi-Ag-AlSi-MeO, où MeO est un oxyde métallique comme SnO₂, TiO₂, In₂O₃, Bi₂O₃, ZrO₂, Ta₂O₅, SiO₂ ou Al₂O₃, ou un mélange de ces oxydes.

11. Substrat selon l'une quelconque des revendications 1 à 8, ***caractérisé par*** la suite des couches substrat-SiO₂-MeO-ZnO:AlSi-Ag-AlSi-MeO, où MeO est un oxyde métallique comme SnO₂, TiO₂, In₂O₃, Bi₂O₃, ZrO2, Ta₂O₅, SiO₂ ou Al₂O₃, ou un mélange de ces oxydes.

12. Substrat selon l'une quelconque des revendications 1 à 8, ***caractérisé par*** la suite des couches substrat-Al₂O₃-MeO-ZnO:AlSi-Ag-AlSi-MeO, où MeO est un oxyde métallique comme SnO₂, TiO₂, In₂O₃, Bi₂O₃, ZrO₂, Ta₂O₅, SiO₂ ou Al₂O₃, ou un mélange de ces oxydes.

13. Substrat selon l'une quelconque des revendications 1 à 8, ***caractérisé par*** la suite des couches substrat-MeO-ZnO:AlSi-Ag-AlSi-MeN-MeO, où MeO est un oxyde métallique comme SnO₂, TiO₂, In₂O₃, Bi₂O₃, ZrO2, Ta₂O₅, SiO₂ ou Al₂O₃, ou un mélange de ces oxydes et MeN est un nitrure comme Si₃N₄.

14. Vitrage bas-émissif, anti-solaire ou chauffant, incorporant au moins un substrat selon l'une des revendications précédentes, notamment sous forme de vitrage multiple ou de vitrage feuilleté.
